# EUROPÄISCHE PATENTSCHRIFT

(11) **EP 0 421 098 B1**
(45) Veröffentlichungstag und Bekanntmachung des Hinweises auf die Patenterteilung: **13.01.1993**
(21) Anmeldenummer: 90115639.8
(22) Anmeldetag: 16.08.1990
(51) Int. Cl.: B60K 11/04, F24F 13/15

(54) **Abdeckvorrichtung für einen Wärmetauscher eines Fahrzeugs**
Shutter assembly for a heat exchanger of a vehicle
Dispositif d'obturation pour un échangeur thermique de véhicule

(30) Priorität: 05.10.1989 DE 3933199
(43) Veröffentlichungstag der Anmeldung: 10.04.1991
(73) Patentinhaber: MERCEDES-BENZ AG, 70327 Stuttgart (DE)
(72) Erfinder: Bandlow, Reiner, D-7316 Köngen (DE); Kleineberg, Wolfgang, D-7260 Calw 4 (DE)

(56) Entgegenhaltungen:
- DE-A- 3 836 374
- US-A- 4 735 131

## Beschreibung

Die Erfindung bezieht sich auf eine Abdeckvorrichtung für einen Wärmetauscher eines Fahrzeugs der im Oberbegriff des Hauptanspruches angegebenen Art.

Aus der DE-C-3 631 785 ist bereits eine Abdeckvorrichtung als bekannt zu entnehmen, die zum Aufgliedern eines Luftführungskanals in einen luftdurchströmten und in einen wasserdurchfluteten Teilkanal vorgesehen ist. Bei geöffneter Abdeckvorrichtung kann jedoch der gesamte Kühlerquerschnitt von Kühlluft durchströmt werden. Auch ist beim Landbetrieb des Basisfahrzeugs und bei vollständig geschlossener Abdeckvorrichtung die Kühlluftdurchströmung des Kühlers vollständig aufgehoben. Hierbei ist einer der Teilkanäle bis zu einer Trennwand unmittelbar mittels einer Klappenjalousie gesperrt, die vor dem Kühler angeordnet ist. Demgegenüber ist die Durchströmung des zweiten Teilkanals mittelbar, d.h. durch einen Rückstauraum gesperrt, der von der Trennwand, einer Kanalwand und einer separaten Klappe begrenzt wird, welche eine hinter dem Kühler liegende Überströmöffnung zwischen der Trennwand und der Kanalwand abdeckt.

Die vorbekannte Aufteilung des Lüftführungskanals ist relativ aufwendig, da die Trennwand quer durch den Kühler hindurchführen muß, und da die zusätzliche Klappe eines eigenen Antriebes samt Ansteuerung bedarf. Zudem erfordert die Gesamtanordnung der Abdeckvorrichtung im Luftführungskanal einen erheblichen Einbauraum, der konstruktiv nicht immer verfügbar sein wird.

Auf unserer eigenen Patentanmeldung beruhend ist ferner aus der nicht vorveröffentlichten DE-A-3 836 374 eine gattungsgemäße Abdeckvorrichtung bekannt, die in einem besonders kompakten Luftführungskanal angeordnet ist. Diese Abdeckvorrichtung besteht aus einer einzelnen Klappenjalousie, die raumsparend zwischen einem Kühler und einem Lüfter in einer Lüfterhaube liegt.
Da diese Klappenjalousie den Kühler vollständig überdeckt, ist dessen Kühlluftdurchströmung bei geschlossener Kühlerjalousie vollständig gesperrt. Auch sind die einer schräg auf die Lüfteröffnung zulaufenden Kanalwand der Lüfterhaube gegenüberliegenden Klappen der Kühlerjalousie im Öffnungszustand schräg auf die Lüfteröffnung ausgerichtet. Dadurch sind die schrägstehenden Klappen als Leitflächen wirksam und nehmen darüber hinaus eine geringere Bautiefe in Anspruch. Jedoch verläuft die Kanalwand in einem geringen Abstand hinter der Abdeckebene der Klappenjalousie, wodurch der Durchströmungswiderstand des Kühlers im Bereich der schrägstehenden Klappen erheblich erhöht ist. Trotz der reduzierten Bautiefe der schrägstehenden Klappen kann die davon betroffene Wärmetauscherfläche des Kühlers, insbesondere bei seiner Fahrtwinddurchströmung, nur unzureichend genutzt werden. Vergrößerte man demgegenüber den Abstand der Kanalwand zu den Hinterkanten der schrägstehenden Klappen, so wäre damit auch eine unerwünschte Vergrößerung der Lüfterhaube verbunden.

Der Erfindung liegt die Aufgabe zugrunde, eine gattungsgemäße Abdeckvorrichtung für einen Wärmetauscher eines Fahrzeugs dahingehend weiterzuentwickeln, daß sie bei reduziertem Bauaufwand in höherem Maße zur Anordnung in einem kompakten Luftkührungskanal geeignet ist.

Die erfindungsgemäße Lösung dieser Aufgabe ergibt sich aus den kennzeichnenden Merkmalen des Hauptanspruchs. Da nach der Erfindung alle Klappen der Abdeckvorrichtung der Klappenjalousie angehören, ist nur für die Klappenjalousie selbst ein Antrieb sowie eine Ansteuerung erforderlich. Zudem muß die Klappenjalousie nur noch den nahezu geradlinig durchströmten Flächenbereich des Wärmetauschers überdecken, so daß nur eine minimale Anzahl von Klappen erforderlich sind.

Vorteilhafte Ausgestaltungen der Erfindung gehen aus den übrigen Ansprüchen hervor.

Für einen gemeinsamen Antrieb aller Klappen der Klappenjalousie ist es zweckmäßig, wenn deren Schwenkachsen in einer Ebene liegen. Wird die den seitlichen Abschluß der Kühlerjalousie bildende Sonderklappe im Nahbereich ihrer Hinterkante gelagert, so kann der Dichtschenkel der benachbarten, wippenartig gelagerten Klappe an der Hinterkante der gleichsinnig aber winkelversetzt bewegten Sonderklappe zur Anlage kommen.

Steht die Sonderklappe bei geöffneter Kühlerjalousie schräg zur Anströmrichtung des Fahrtwindes, so kann sie mit den übrigen Klappen einen übereinstimmenden Klappwinkel aufweisen, wodurch ein gemeinsamer Antrieb weiter vereinfacht ist.

Eine bestmögliche Bauraumausnutzung ist möglich, wenn die Anströmkante der Sonderklappe bei geöffneter Klappenjalousie mit den Anströmkanten der übrigen Klappen in einer Ebene liegt. Hierbei können die Anströmkanten nahezu bis an die Austrittsfläche des Wärmetauschers heranreichen.

Um an der Sonderklappe eine den übrigen Klappen entsprechende Überdeckung zur benachbarten Klappe zu erreichen, kann die Sonderklappe mit einem abgewinkelten Schenkel versehen sein. Die Länge dieses Schenkels sollte jedoch auf das Maß der Klappenüberdeckung beschränkt sein, da der Schenkel bei geöffneter Klappenjalousie in die Überströmöffnung hineinragt.

Die Abdeckvorrichtung ist wegen ihrer kompakten Bauweise in hohem Maße zur Anordnung als Kühlerjalousie in engen Lüfterhauben von Kraftfahrzeugen geeignet.

Darüber hinaus wäre jedoch auch ein Einsatz an Wärmetauschern denkbar, wie sie bei Kraftwagen zur Heizung bzw. Klimatisierung üblich sind.

Im folgenden ist ein Ausführungsbeispiel der Erfindung anhand einer zeichnerischen Darstellung näher erläutert.

Es zeigen:
Fig. 1 eine Anordnung einer Abdeckvorrichtung in einer schematischen Draufsicht, und
Fig. 2 eine schematische Darstellung eines Sonderklappenbereichs der Abdeckvorrichtung als vergrößerte Einzelheit.

In einem Bug eines nicht dargestellten Kraftwagens ist hinter einem Kühlergrill ein Kühler-Lüfter-System 1 angeordnet. Das Kühler-Lüfter-System 1 umfaßt als Hauptbestandteile einen Fahrzeugkühler 2, in dem Kühlwasser zirkuliert; eine Lüfterhaube 3, einen Lüfter 4 und eine Klappenjalousie 5. Der Fahrzeugkühler 2 ist zuvorderst in einer Breitenebene des Motorraumes angeordnet und wird quer zu seiner Flächenerstreckung von Kühlluft durchströmt. Die auf seiner nach vorn gewandten Lufteintrittsfläche auftreffende Fahrtwindanströmung ist durch mehrere Pfeile angedeutet. Hinter dem Fahrzeugkühler 2 liegt zunächst die Lüfterhaube 3, die den Luftaustrittsquerschnitt des Fahrzeugkühlers 2 umlaufend umschließt und den Kühlluftstrom zu einer Lufteintrittsöffnung des axial fördernden Lüfters 6 hinleitet. Hierzu sind ihre Begrenzungswände an den Umfang einer runden Lüfterzarge des Lüfters 4 angeschlossen, so daß die Lüfterhaube 3 einen umlaufend geschlossenen Luftführungskanal 6 begrenzt. Jedoch überdeckt die Lufteintrittsöffnung des Lüfters 4, die der Luftaustrittsfläche des Fahrzeugkühlers 2 in einem Abstand parallel gegenüberliegt, nur die rechte Hälfte der Luftaustrittsfläche. Dadurch liegt der linken Hälfte der Luftaustrittsfläche des Fahrzeugkühlers 2 eine Kanalwand 3a gegenüber, die bei Fahrtwinddurchströmung des Fahrzeugkühlers 2 staudruckbeaufschlagt ist. Damit die Abluftströmung des Fahrzeugkühlers 2 in diesem Flächenbereich widerstandsärmer zur Lufteintrittsöffnung des Lüfters 4 hin umgelenkt werden kann, läuft die Kanalwand 3a leicht schräg auf die Lufteintrittsöffnung des Lüfters 4 zu, wobei sich ihr Abstand vom Fahrzeugkühler 2 in Richtung der umgelenkten Strömung gesehen zunehmend vergrößert.

Um bei minimalem Aufwand in Abhängigkeit von Betriebsparametern des Kühlsystems zeitweilig eine Kühlluftdurchströmung des Fahrzeugkühlers 2 zu verhindern, ist die Klappenjalousie 5 in einer parallelen Ebene zwischen dem Fahrzeugkühler 2 und dem Lüfter 4 angeordnet, wobei sie eine rechte Teilfläche der Luftaustrittsfläche des Fahrzeugkühlers 2 vollständig überdeckt und in Breitenrichtung des Fahrzeugkühlers 2 gesehen mit Erreichen der Kanalwand 3a endet.

Die Klappenjalousie 5 besteht in an sich bekannter Weise aus einer Vielzahl einzelner Klappen 7, die entlang ihrer Mittellängsachse auf vertikalen Schwenkachsen 8 gelagert sind, und deren Schwenkachsen 8 in einem Abstand voneinander in einer gemeinsamen Ebene angeordnet sind. Die Anordnungsebene der Schwenkachsen 8 entspricht der Abdeckebene der Klappenjalousie 5, da die Klappen 7 bei geschlossener Klappenjalousie 5 in diese Ebene geschwenkt sind, wodurch sie einander überlappend in ihrer Gesamtheit eine geschlossene Wand bilden. Bei geöffneter Klappenjalousie 5 sind die Klappen 7 demgegenüber um einen Winkel von etwas weniger als 90° in eine Durchlaßstellung geschwenkt, wonach sie über ihren Querschnitt gesehen parallel zur Anströmrichtung des Fahrtwindes ausgerichtet sind. In dieser dargestellten Durchlaßstellung der Klappen 7 kann die Abluftströmung des Fahrzeugkühlers 2 widerstandsarm zwischen ihnen hindurchstreichen. Auch liegen die nach vorn gewandten Anströmkanten der Klappen 7 unmittelbar hinter der Austrittsfläche des Fahrzeugkühlers 2. Die Abdichtung der geschlossenen Klappenjalousie 5 entlang ihrem Umfang ist oben, unten und rechtsseitig unproblematisch, da die Stirnkanten der Klappen 7 bzw. ein hinterkantennaher Endbereich der den rechtsseitigen Abschluß der Klappenjalousie 5 bildenden Klappe 7 überlappend mit einer Gegenfläche der Lüfterhaube 3 zusammenwirken können.

Problematisch ist hingegen die Abdeckung eines Überströmkanals 6a, der sich zwischen der geschlossenen Klappenjalousie 5 und der in einem Abstand hinter dieser verlaufenden Kanalwand 3a befindet. Damit dieser Überströmkanal 6a im Zuge des Schließvorganges der Klappenjalousie 5 mitabgedeckt werden kann, ist die den linksseitigen Abschluß der Klappenjalousie 5 bildende Klappe als Sonderklappe 9 ausgebildet. Im Unterschied zu den übrigen Klappen 7 ist die Sonderklappe 9 jedoch nicht entlang ihrer Mittellängsachse sondern zum Nahbereich ihrer Hinterkante parallelverschoben auf einer Schwenkachse 8a angelenkt. Diese Schwenkachse 8a weist einen etwas geringeren Abstand zur benachbarten Schwenkachse 8 auf als die Schwenkachsen 8 untereinander. Ferner erstreckt sich die Sonderklappe 9 bei geöffneter Klappenjalousie 5 von der Schwenkachse 8a ausgehend schräg nach vorn, wodurch sie mit der benachbarten Klappe 7 einen spitzen Winkel einschließt. Ihre Schwenkauslage ist dabei so bemessen, daß ihre Anströmkante in der gleichen Ebene liegt wie die Anströmkanten der übrigen Klappen 7. Außerdem ist die Schwenkauslage der Sonderklappe 9 derart auf den Abstand der Schwenkachse 8a von der gegenüberliegenden Kanalwand 3a abgestimmt, daß ihre Anströmkante nach einem Schwenkwinkel α an der Kanalwand 3a anschlägt, wonach der Überströmkanal 6a abgedeckt ist.

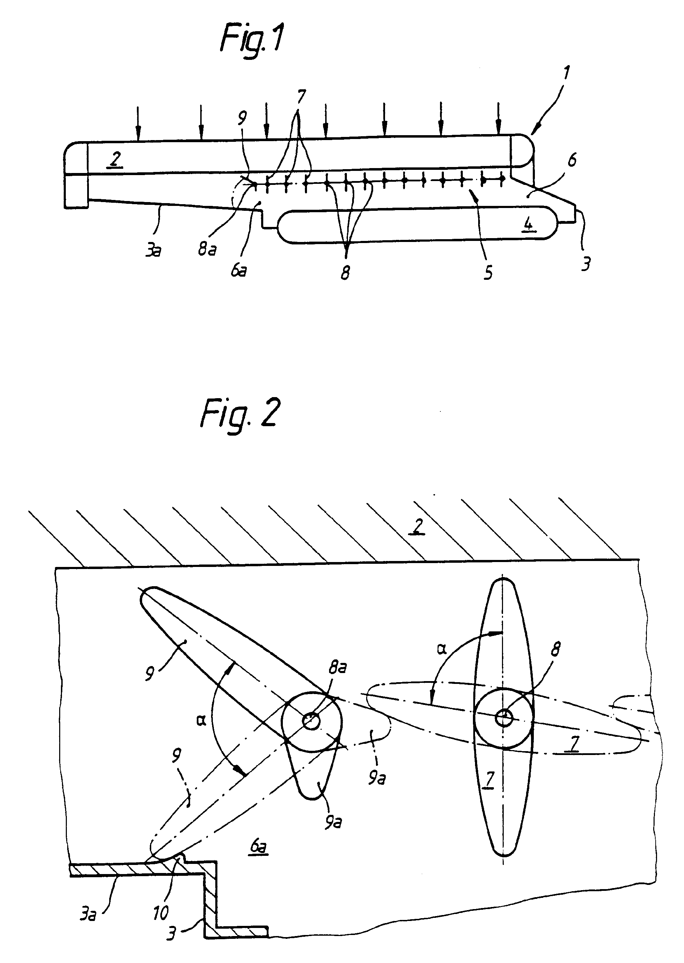

Wie in Fig. 2 sichtbar ist, stimmt dieser Schwenkwinkel α hier exakt mit dem Winkel α zwischen der Durchlaßstellung und der durch unterbrochene Linien angedeuteten Schließstellung der übrigen Klappen 7 überein. Dadurch können alle Klappen 9 und 7 in technisch einfacher Weise synchron und im gleichen Richtungssinn verschwenkt werden. Eine einfache mechanische Antriebseinrichtung kann beispielsweise aus einer axial angetriebenen Zugstange bestehen, an der alle Klappen 9 und 7 über jeweils einen drehfest mit diesen verbundenen Kurbelhebel angelenkt sind. Derartige Antriebseinrichtungen sind als solche z.B. aus der DE-C-943 158 hinreichend bekannt und daher nicht im einzelnen erläutert.

Um eine flächige Überdeckung der Hinterkante der Sonderklappe 9 durch den anströmseitigen Endbereich der benachbarten Klappe 7 zu ermöglichen, endet die Sonderklappe 9 nicht in einer zylindrischen Lagerhülse, welche die Schwenkachse 8a umschließt, sondern weist einen über die Schwenkachse 8a hinausragenden Überstand in Form eines kurzen Schenkels 9a auf, der im Querschnitt gesehen vom längeren Schenkel der Sonderklappe 9 abgewinkelt ist. Der Querschnitt des Schenkels 9a ist entsprechend dem Querschnitt der übrigen Klappen 7 im anströmkantenseitigen Endbereich keilförmig gestaltet. Auch erstreckt er sich bei geöffneter Klappenjalousie 5 parallel zur Querschnittslängsachse der übrigen Klappen 7. Dadurch ergibt sich bei geschlossener Klappenjalousie 5 zwischen der Sonderklappe 9 und der benachbarten Klappe 7 eine Abdichtung, die in ihrer Qualität mit der Abdichtung der Klappen 7 untereinander gleichwertig ist.

Eine ähnliche flächige Überdeckung kann zur Verbesserung der Abdichtwirkung auch zwischen der Kanalwand 3a und dem Endbereich des längeren Schenkels der Sonderklappe 9 vorgesehen werden. Hierzu ragt von der Kanalwand 3a eine erhabene Nase 10 ab, die auf ihrer Anschlagseite der keilförmigen Krümmung der Anströmkante der Sonderklappe 9 entsprechend geformt ist.

Alternativ wäre es jedoch auch denkbar, die erhabene Nase 10 durch eine Vertiefung in der Kanalwand 3a zu ersetzen.

## Patentansprüche

1. Abdeckvorrichtung für einen Wärmetauscher (2) eines Fahrzeugs, bestehend aus einer Klappenjalousie (5), die in einer Querebene eines die luftdurchströmte Fläche des Wärmetauschers (2) umschließenden Luftführungskanals (6) angeordnet ist, mit einer eine Teilfläche des Wärmetauschers (2) weitgehend überdeckenden Kanalwand (3a), durch die der Luftführungskanal (6) stromab des Wärmetauschers (2) und der Klappenjalousie (5) verengt ist, und mit einer Klappenabdeckung einer zwischen der Klappenjalousie (5) und der Kanalwand (3a) liegenden Überströmöffnung (6a), wobei alle Klappen der Klappenjalousie (5) um zueinander und zur Kanalwand (3a) parallele sowie in einer Ebene liegende Schwenkachsen (8, 8a) schwenkbeweglich sind,
**dadurch gekennzeichnet**,
daß nur ein Teil der luftdurchströmten Fläche des Wärmetauschers (2) von der Klappenjalousie (5) überdeckt ist, und daß die bei geschlossener Klappenjalousie (5) zwischen deren Ende und der Kanalwand (3a) verbleibende Überströmöffnung (6a) von der letzten Abschlußklappe (9) der Klappenjalousie (5) mit abgedeckt ist.

2. Abdeckvorrichtung nach Anspruch 1,
**dadurch gekennzeichnet,**
daß die Abschlußklappe als Sonderklappe (9) im Nahbereich ihrer Hinterkante gelagert ist, und daß die übrigen Klappen (7) der Klappenjalousie (5) entlang ihrer Mittellängsachse gelagert sind.

3. Abdeckvorrichtung nach Anspruch 1 oder 2,
**dadurch gekennzeichnet,**
daß alle Klappen (7, 9) der Klappenjalousie (5) um einen weitgehend gleichen, nahezu rechten Winkel schwenkbar sind, daß die Sonderklappe (9) bei geöffneter Klappenjalousie (5) schräg zur Anströmrichtung der Luft stehend auf den verengten Kanalquerschnitt ausgerichtet ist, und daß die übrigen Klappen (7) parallel zur Anströmrichtung der Luft ausgerichtet sind.

4. Abdeckvorrichtung nach Anspruch 3,
**dadurch gekennzeichnet,**
daß die Anströmkante der Sonderklappe (9) bei geöffneter Klappenjalousie (5) mit den Anströmkanten der übrigen Klappen (7) in einer Ebene liegt.

5. Abdeckvorrichtung nach Anspruch 3,
**dadurch gekennzeichnet,**
daß die Sonderklappe (9) im Querschnitt gesehen abgewinkelt ist, und daß sich ein kurzer Schenkel (9a) der Sonderklappe (9), der schwenkachsenseitig übersteht, parallel zu den übrigen Klappen (7) der Klappenjalousie (5) erstreckt.

## Claims

1. Screening device for a heat exchanger (2) of a vehicle, comprising a flap-type blind (5) which is arranged in a transverse plane of an air duct (6) surrounding that area of the heat exchanger (2) through which air flows, having a duct wall (3a), which substantially covers a partial area of the heat exchanger (2) and by which the air duct (6) is narrowed downstream of the heat exchanger (2) and the flap-type blind (5), and having flap screening of an overflow opening (6a) situated between the flap-type blind (5) and the duct wall (3a), all flaps of the flap-type blind (5) being swivellably movable about swivelling axes (8, 8a) lying parallel to one another and to the duct wall (3a) and in one plane, characterized in that only part of that area of the heat exchanger (2) through which air flows is covered by the flap-type blind (5) and in that the overflow opening (6a) which remains when the flap-type blind (5) is closed, between the end of the latter and the duct wall (3a), is also screened off, by the last, terminal flap (9) of the flap-type blind (5).

2. Screening device according to Claim 1, characterized in that the terminal flap, as special flap (9), is mounted in the vicinity of its rear edge and in that the remaining flaps (7) of the flap-type blind (5) are mounted along their central longitudinal axis.

3. Screening device according to Claim 1 or 2, characterized in that all flaps (7, 9) of the flap-type blind (5) can be swivelled about a substantially identical, almost right angle, in that, with the flap-type blind (5) opened, the special flap (9) is oriented towards the narrowed duct cross-section and obliquely to the inflow direction of the air and in that the remaining flaps (7) are aligned parallel to the inflow direction of the air.

4. Screening device according to Claim 3, characterized in that, with the flap-type blind (5) opened, the leading edge of the special flap (9) lies in one plane with the leading edges of the remaining flaps (7).

5. Screening device according to Claim 3, characterized in that, as seen in cross-section, the special flap (9) is angled and in that a short wing (9a) of the special flap (9), which protrudes on the side of the swivelling axis, extends parallel to the remaining flaps (7) of the flap-type blind (5).

## Revendications

1. Dispositif de recouvrement pour un échangeur de chaleur (2) d'un véhicule, se composant d'une jalousie à lames (5), qui est disposée dans un plan transversal d'un canal (6) de guidage d'air entourant la surface, traversée par l'air, de l'échangeur de chaleur (2) et comportant une paroi (3a), recouvrant dans une large mesure une partie de surface de l'échangeur de chaleur (2) et par laquelle le canal (6) de guidage d'air est rétréci en aval de l'échangeur de chaleur (2) et de la jalousie à lames (5), avec en outre un recouvrement par lame d'une ouverture de décharge (6a) située entre la jalousie (5) et la paroi de canal (3a), toutes les lames de la jalousie (5) pouvant pivoter autour d'axes de pivotement (8,8a) parallèles entre eux et à la paroi de canal (3a) et situés dans un plan, caractérisé en ce que seulement une partie de la surface, traversée par l'air, de l'échangeur de chaleur (2) est recouverte par la jalousie à lames (5) et en ce que l'ouverture de décharge (6a), subsistant quand la jalousie (5) est fermée, entre son extrémité et la paroi de canal (3a), est recouverte par la dernière lame de fermeture (9) de la jalousie (5).

2. Dispositif de recouvrement selon la revendication 1, caractérisé en ce que la lame de fermeture est montée à rotation comme une lame spéciale (9) au voisinage de son bord arrière et en ce que les autres lames (7) de la jalousie (5) sont montées à rotation le long de leur axe longitudinal central.

3. Dispositif de recouvrement selon la revendication 1 ou 2, caractérisé en ce que toutes les lames (7,9) de la jalousie (5) peuvent pivoter d'un angle presque droit et sensiblement identique, en ce que la lame spéciale (9) est orientée, quand la jalousie (5) est ouverte, en oblique par rapport à la direction d'entrée de l'air en étant située dans la section rétrécie du canal, et en ce que les autres lames (7) sont orientées parallèlement à la direction d'entrée de l'air.

4. Dispositif de recouvrement selon la revendication 3, caractérisé en ce que le bord d'attaque de la lame spéciale (9) est situé, quand la jalousie (5) est ouverte, dans un même plan que les bords d'attaque des autres lames (7).

5. Dispositif de recouvrement selon la revendication 3, caractérisé en ce que la lame spéciale (9) est coudée en vue en coupe et en ce qu'une branche courte (9a) de la lame spéciale (9), qui fait saillie du côté de l'axe de pivotement, est orientée parallèlement aux autres lames (7) de la jalousie (5).
